# EUROPEAN PATENT APPLICATION

(11) **EP 4 391 701 A1**
(43) Date of publication of application: **26.06.2024**
(21) Application number: 21953666.1
(22) Date of filing: 16.08.2021
(51) Int. Cl.: H04W 76/11

(54) **COMMUNICATION METHOD AND COMMUNICATION APPARATUS**

(71) Applicant: Beijing Xiaomi Mobile Software Co., Ltd., Beijing 100085 (CN)
(72) Inventor: DONG, Xiandong, Beijing 100085 (CN)
(74) Representative: Steinbauer, Florian
(86) International application number: PCT/CN2021/112875
(87) International publication number: WO 2023/019412

(57) **Abstract**

The present disclosure provides a communication method and a communication apparatus. The communication method can comprise: determining a first message frame, wherein the first message frame comprises the identification information of an operation mode to be maintained, and the identification information corresponds to connection information used for identifying a connection to which the operation mode is applicable; and transmitting the first message frame.

## Description

### TECHNICAL FIELD

The present disclosure relates to the field of wireless communications, and more specifically, to a communication method and a communication apparatus.

### BACKGROUND

The current research scope of Wi-Fi technology includes 320MHz bandwidth transmission, aggregation and coordination of multiple frequency bands, etc. It is expected to increase the rate and throughput by at least four times compared to the existing standards. The main application scenarios are Video transmission, Augmented Reality (AR), Virtual Reality (VR), etc.

The aggregation and collaboration of multiple frequency bands refers to the simultaneous communication between devices in 2.4GHz, 5GHz, and 6GHz frequency bands. For the simultaneous communication between devices in multiple frequency bands, a new Media Access Control (MAC) mechanism needs to be defined for ease of management. In addition, it is also expected that the aggregation and coordination of multiple frequency bands can support low-latency transmission.

The current multi-band aggregation and system technology supports a maximum bandwidth of 320MHz (160MHz+160MHz), and may also support 240MHz (160MHz+80MHz) and other bandwidths.

In current technology, stations (STA) and access points (AP) may be multi-link devices (MLD), that is, supporting the sending and/or receiving function on multiple links. Therefore, in the current technology, multiple links may exist between STA and AP, and the communication between these two devices on multiple links is being studied.

### SUMMARY

Aspects of the present disclosure are to address at least the above problems and/or disadvantages. Various embodiments of the present disclosure provide the following technical solutions.

An example embodiment according to the present disclosure provides a communication method. The communication method may be applied to a non-AP STA MLD, and includes determining a first message frame. The first message frame includes identification information for indicating an operation mode to be maintained. The identification information corresponds to link information for identifying a link to which the operation mode is applicable. The method further inncludes sending the first message frame.

Another communication method is provided according to example embodiments of the present disclosure. The communication method may be applied to an AP MLD, and includes receiving a first message frame. The first message frame includes identification information for indicating an operation mode to be maintained. The identification information corresponds to link information for identifying a link to which the operation mode is applicable. The method further includes performing a communication operation based on the first message frame.

An example embodiment according to the present disclosure provides a communication apparatus, including a processing module, configured to determine a first message frame. The first message frame includes identification information for indicating an operation mode to be maintained. The identification information corresponds to link information for identifying a link to which the operation mode is applicable. The communication apparatus further includes a transceiving module, configured to send the first message frame.

An example embodiment according to the present disclosure provides another communication apparatus, including a transceiving module, configured to receive a first message frame. The first message frame includes identification information for indicating an operation mode to be maintained. The identification information corresponds to link information for identifying a link to which the operation mode is applicable. The communication apparatus further includes a processing module, configured to control the execution of a communication operation based on the first message frame.

An electronic device is provided according to an example embodiment of the present disclosure. The electronic device includes a memory, a processor, and a computer program stored on the memory and executable by the processor. The processor implements the method as described above when executing the computer program.

An example embodiment according to the present disclosure provides a computer-readable storage medium. A computer program is stored on the computer-readable storage medium. The computer program, when executed by the processor, implements the method described above.

### BRIEF DESCRIPTION OF THE DRAWINGS

The above and other features of embodiments of the present disclosure will be more apparent by describing in detail example embodiments of the present disclosure with reference to the accompanying drawings, in which:
FIG. 1 is an example diagram illustrating a wireless communication scenario.
FIG. 2 is a flowchart illustrating a communication method according to an embodiment of the present disclosure.
FIG. 3 is a flowchart illustrating a communication method according to another embodiment of the present disclosure.
FIG. 4 is a block diagram illustrating a communication apparatus according to an embodiment of the present disclosure.

### DETAILED DESCRIPTION OF THE EMBODIMENTS

The following description with reference to the accompanying drawings is provided to assist in a comprehensive understanding of various embodiments of the present disclosure as defined by the appended claims and their equivalents. Various embodiments of the present disclosure include various specific details, but these specific details are considered to be examples only. Additionally, descriptions of well-known techniques, functions, and constructions may be omitted for the sake of clarity and conciseness.

The terms and words used in the present disclosure are not limited to the written meanings, but, are merely used by the inventor(s) to enable a clear and consistent understanding of the present disclosure. Accordingly, to those skilled in the art, the description of the various embodiments of the present disclosure is provided for illustration purpose only and not for purpose of limitation.

It will be understood that, as used herein, the singular forms "a," "an," "the", and "said" may indicate the plural forms as well, unless the context clearly dictates otherwise. It should be further understood that the word "comprising" as used in the present disclosure refers to the presence of the described features, integers, steps, operations, elements and/or components, but does not exclude the presence or addition of one or more other features, integers, steps, operations, elements, components and/or groups thereof.

It will be understood that, although the terms "first," "second," etc. may be used herein to describe various elements, these elements should not be limited by these terms. These terms are only used to distinguish one element from another. Accordingly, a first element discussed below may be termed a second element without departing from the teachings of example embodiments.

It will be understood that when an element is referred to as being "connected" or "coupled" to another element, it may be directly connected or coupled to the other element or intervening elements may also be present. Additionally, "connected" or "coupled" as used herein may include wireless links or wireless couplings. As used herein, the term "and/or" or the expression "at least one/at least one of" includes any and all combinations of one or more of the associated listed items.

Unless otherwise defined, all terms (including technical and scientific terms) used herein have the same meaning as that commonly understood by one of ordinary skill in the art to which the present disclosure belongs.

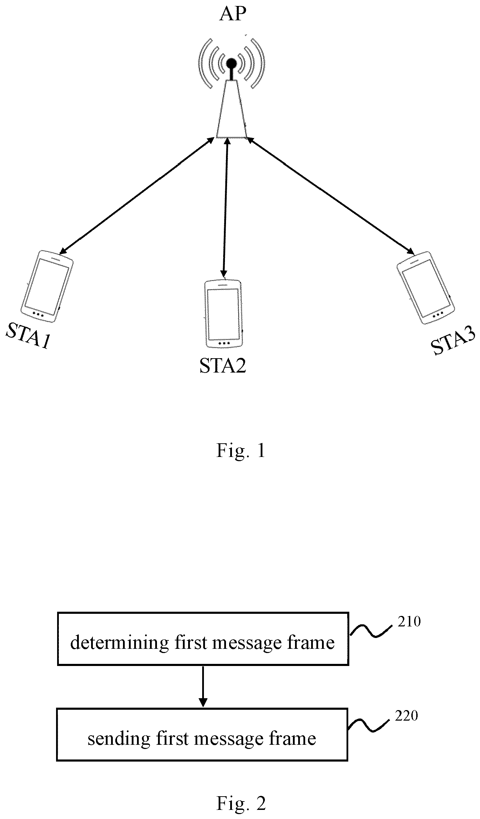

FIG. 1 is an example diagram illustrating a wireless communication scenario.

In a wireless LAN, a Basic Service Set (BSS) may consist of an Access Point (AP) device and one or more non-AP devices (or stations (STA)) that communicate with the AP device. One Basic Service Set may be connected to the Distribution System DS through the AP device thereof, and then connected to another Basic Service Set to form an Extended Service Set (ESS).

The AP device is a wireless switch used for wireless networks and is also an access device for wireless networks. The AP device may be used as a wireless base station, and is mainly used as a bridge for connecting wireless networks and wired networks. Using the AP device, wired and wireless networks can be integrated.

As an example, an AP device may include software applications and/or circuitry, so that other types of nodes in the wireless network can communicate through the AP with devices both outside and within the wireless network. For example, the AP device may be a terminal device or a network device equipped with a Wireless-Fidelity (Wi-Fi) chip.

By way of example, STA devices may include, but are not limited to, cellular phones, smartphones, wearable devices, computers, Personal Digital Assistants (PDAs), Personal Communications System (PCS) devices, Personal Information Managers (PIMs), Personal Navigation Devices (PNDs), global positioning system, multimedia device, Internet of Things (IoT) device, etc.

Although one AP device is shown communicating with three station (STA) devices (STA1, STA2, STA3) in FIG. 1, this is only an example, and embodiments of the present disclosure are not limited thereto. For example, the AP device and the STA devices may be of any number and/or of any type.

In example embodiments of the present disclosure, the AP device and the station (STA) device may be multi-link devices (MLD). For example, they may be represented as AP MLD and non-AP STA MLD respectively. That is, the AP MLD and the non-AP STA MLD support the transmiting and/or receiving function simultaneously on multiple links at the same time. For example, there may be multiple links at different frequencies between the AP MLD and the non-AP STA MLD, such as links at 2.4GHz, 5GHz, and 6GHz, or several links having identical bandwidth or different bandwidths at 2.4GHz, 5GHz, and 6GHz. Additionally, multiple channels may exist on each link. The communication method and the communication apparatus provided according to the embodiments of the present disclosure can be applied to the communication between AP MLD and non-AP STA MLD. That is, they can be applied to a multi-link communication environment.

Non-AP STA MLD can support two modes: Enhanced-MultiLink Single Radio (EMLSR) and Enhanced-MultiLink Multi-Radio (EMLMR), but non-AP STA MLD can only maintain one mode at a certain time. EMLSR indicates that the non-AP STA MLD can only communicate with the AP MLD on one link at a certain time. EMLMR indicates that the non-AP STA MLD can communicate with the AP MLD on multiple links at a certain time.

During the multi-link establishment or association process between AP MLD and non-AP STA MLD, the non-AP STA MLD only identifies its support of EMLSR and/or EMLMR in the basic Multi-Link (ML) information element. But there is no clear stipulation on which links support EMLSR or EMLMR at a certain moment, so improvements are needed.

FIG. 2 is a flowchart illustrating a communication method according to an embodiment. The communication method shown in FIG. 2 may be applied to a non-AP STA MLD.

Referring to FIG. 2, in step 210, a first message frame may be determined. In step 220, the first message frame may be sent.

In embodiments of the present disclosure, the first message frame may be, for example, but not limited to, an Enhanced Multi-Link EML operation mode notification frame. The first message frame (EML operation mode notification frame) is used to instruct the affiliated STA of the non-AP STA MLD to change its operation mode. However, the present disclosure is not limited thereto, and other types of frames capable of carrying an indication of the operation mode are also possible.

In embodiments of the present disclosure, there may be many ways to determine the first message frame. For example, the first message frame may be generated according to at least one of the following: channel status, network conditions, load conditions, hardware capabilities of sending/receiving device, traffic categories, or relevant protocol provisions. The embodiments of the present disclosure do not impose specific limitations in this regard. In an embodiment of the present disclosure, the first message frame may also be acquired from an external device, and the embodiments of the present disclosure do not impose any specific limitations in this regard.

According to an embodiment of the present disclosure, the first message frame includes identification information for indicating an operation mode to be maintained. The identification information corresponds to link information for identifying a link to which the operation mode is applicable.

In some example embodiments of the present disclosure, the identification information may be included in the first message frame.

For the convenience of description, in the following, the first message frame is described by taking the Enhanced Multi-Link operation mode notification frame as an example. For example, identification information and link information may be carried in the Action field of the first message frame, as in the format shown in Table 1 below.

**Table 1. Action field of Enhanced Multi-Link operation mode notification frame**

| Order | Information |
|---|---|
| 1 | Category |
| 2 | EHT Action |
| 3 | Dialog Token |
| 4 | EML Control |
| 5 | Link set |

Referring to FIG. 1, the Order indicates the position order of each piece of Information in the first message frame. As a descriptive example only, the first message frame may include a Category field, an Extremely High Throughput EHT Action field, a Dialog Token field, an EML Control field, and a Link set field, etc. However, the present disclosure is not limited thereto, and some information may be omitted from Table 1, or more other information may be included.

The "EML Control" field in Table 1 may be used as an example of the identification information included in the first message frame and used for indicating the operation mode to be maintained. For example, the EML Control domain may have a format as shown in Table 2 below.

**Table 2. format of EML Control domain**

| | | | |
|---|---|---|---|
| B0 | B1 | B2 | B7 |
| EMLSR mode | EMLMR mode | Reserved | |
| Bit: 1 | 1 | 6 | |

The identification information included in the first message frame and used for indicating the operation mode to be maintained may be identified by the EMLSR mode subfield and the EMLMR mode subfield in Table 2.

For example, if the EMLSR mode subfield is set to a specific value (such as, but not limited to, 1), it indicates operating in the EMLSR mode of operation. In this case, the EMLMR mode subfield may be set to "0".

For example, if the EMLMR mode subfield is set to a specific value (such as, but not limited to, 1), it indicates operating in the EMLMR mode of operation. In this case, the EMLSR mode subfield may be set to "0".

The "Link set" field in Table 1 may be used as an example of the link information included in the first message frame and used for identifying the link to which the operation mode is applicable. In other words, the link information in the first message frame may represent link set information. The link set information includes multiple bits, and the multiple bits respectively correspond to multiple link identification information supported by the non-AP STA MLD.

According to an embodiment of the present disclosure, in the case where at least one bit of the link set information (Link set) is set to a specific value, the link set information (Link set) may indicate that the operation mode indicated by the identification information in the first message frame is maintained on at least one link corresponding to the at least one bit.

For example, if the non-AP STA MLD supports a maximum of 16 antennas, the length of the link set information (Link set) may be 2 bytes (16 bits). If a certain bit or certain bits of the link set information (Link set) is/are set to a specific value(s) (for example, but not limited to, 1), it is identified as an EMLSR or EMLMR link. That is, on a link set to a specific value, the operation is in the operation mode defined in Table 2.

Since non-AP STA MLD can only maintain one mode at a time, only one Link set information field is needed. For example, if the EMLSR mode bit or the EMLMR mode bit in the EML control field is set to "1", then the Link set information field is reused. For example, by combining Table 1 and Table 2, if the EMLMR mode subfield is set to "1", the EMLSR mode subfield is set to "0", and the link set information is set to "0000 0000 0000 0011", it can be identified that the EMLMR operation mode will be maintained on the link corresponding to the lowest two bits in the link set information.

Although Table 2 shows that the link information can be expressed in the form of a Link set, the present disclosure is not limited thereto. For example, the link information may represent a Link ID. That is, the Link set with the order "5" in Table 1 can be replaced by one or more Link IDs. Each Link ID may have multiple bits to identify the combined information of the operation spectrum, bandwidth/channel, and Basis Service Set Identifier (BSSID).

The link (Link set or Link ID) identified in the link information may be the link to which the Traffic identifier (TID) is mapped. That is to say, the traffic transmission identified by TID may be performed on the link (Link set or Link ID) identified in the link information.

The embodiments shown in Table 1 and Table 2 help to enable the non-AP STA MLD to flexibly select the operation mode for each link. For example, the operation mode for each link may be considered based on factors such as load balance of certain links, thereby determining the identification information and the link information included in the first message frame.

According to the embodiments shown in Table 1 and Table 2, in the first message frame, the identification information for indicating the operation mode to be maintained and the link information for identifying the link to which the operation mode is applicable may be located in different domains of the first message frame. However, the present disclosure is not limited thereto.

According to an embodiment of the present disclosure, the link information may be located in the same field of the first message frame as the identification information for indicating the operation mode to be maintained. For example, both of them may be located in the EML Control domain in Table 1, in which case the EML Control domain may have a format as shown in Table 3 below.

**Table 3. format of EML Control domain**

| | | | | |
|---|---|---|---|---|
| B0 | B1 | B2 | B3 | B7 |
| EMLSR mode | EMLMR mode | Default use | Reserved | |
| Bit: 1 | 1 | 1 | 5 | |

The EMLSR mode subfield and EMLMR mode subfield in Table 3 may be similar to the embodiment described above with reference to Table 2. For simplicity, repeated descriptions are omitted here.

"Default use" in Table 3 may be used as an example of link information. In this example, the link information (Default use) may have a single bit to indicate that the operation mode indicated by the EMLSR mode subfield and the EMLMR mode subfield is applicable to all links identified by the non-AP STA MLD.

A bit is used in the EML control field to indicate that the EMLSR mode or EMLMR mode is applicable to all links identified by the non-AP STA MLD during the association process or the multi-link establishment process. For example, if two or more links (for example, 16 links) are established between the non-AP STA MLD and the AP MLD during the association process or the multi-link establishment process, and the Default use is set to a specific value (e.g., 1), it may indicate that the operation mode identified by the EMLSR mode subfield or the EMLMR mode subfield in Table 3 can apply to all the two links or more links established (e.g., 16 links). In this case, the Link ID and the Link set may be omitted from Table 1, thereby simplifying the information carried in the first message frame.

It will be understood that the example shown in Table 3 is illustrative and the present disclosure is not limited thereto. For example, the Link set may be carried in the EML Control domain shown in Table 3 to indicate some of the links among all the established links.

The non-AP STA MLD may send the first message frame to the AP MLD. If the AP MLD agrees with the identification information about the operation mode set in the first message frame and the link (link information) to which the operation mode is applicable, the non-AP STA MLD can receive the corresponding feedback frame (or acknowledgment frame) from the AP MLD. If the AP MLD does not agree with the settings in the first message frame, the non-AP STA MLD can receive the recommended operation mode and link information thereof from the AP MLD. That is, the operation mode and the link used may be specifically negotiated between the non-AP STA MLD and the AP MLD.

In other example embodiments of the present disclosure, the identification information may not be included in the first message frame. That is, the link information may be omitted from the first message frame. For example, Link set is omitted from Table 1, Default use is omitted from Table 3, and only the identification information (for example, EMLSR mode and EMLMR mode in Table 2 and Table 3) for indicating the operation mode to be maintained is included in the first message frame (EML operation mode notification frame). That is to say, the first message frame may not contain information for indicating about which specific links will maintain the corresponding operation modes.

As an example, the link information may be included in the capability information transmitted during the multi-link establishment process.

For example, in the case where the operation mode is the EMLMR mode, the link information may indicate a link selected from a plurality of spatial streams identified by the EML capability information in the multi-link information element. Specifically, in the case of EMLMR mode, information bits (which may identify the number of links (number of spatial streams) supported by the receiver and the sender respectively) in the EMLMR Rx NSS and the EMLMR Tx NSS in the EML capabilities information (EML capabilities) subfield of the multi-link information element in the multi-link establishment process can be used (or referred to). The specific links on which the EMLMR mode is performed can be implemented based on the product (for example, the configuration of the receiver and the sender). For example, the EML capability information subfield may have a format as shown in Table 4 below. In this embodiment, a suitable link may be selected from multiple links identified by EMLMR Rx NSS and EMLMR Tx NSS shown in Table 4 in the multi-link establishment process for communicating in the EMLMR mode.

**Table 4. format of EML capability information subfield**

| | | | | | | | | | | | | | |
|---|---|---|---|---|---|---|---|---|---|---|---|---|---|
| B0 | B1 | B3 | B4 | B5 | B7 | B8 | B11 | B12 | B15 | B16 | B19 | B20 | B23 |
| EMLSR Support EMLSR | EMLSR Delay EMLSR | | EMLMR Support EMLMR | EMLMR Delay EMLMR | | Transition Timeout | | Reserved | | EMLMR Rx NSS | | EMLMR Tx NSS | |
| Bit: 1 | 3 | | 1 | 3 | | 4 | | 4 | | 4 | | 4 | |

For example, when the operation mode is the EMLSR mode, the link information may indicate a link selected from the modulation and coding strategy mode and the spatial stream group identified by the information bits in the EHT capability information element. Specifically, in the case of EMLSR mode, the link information identified by the information bit (Supported EHT-MCS and NSS Set field) in the EHT capability information element during the multi-link establishment process is used. That is, an appropriate link may be selected from the links identified in Table 5 below (each link corresponding to a respective Modulation and Coding Strategy (MCS) mode) to communicate in EMLSR mode, and how to select which links may be accomplished based on the product.

**Table 5. EHT-MCS mapping (20MHz-Only STA) subfield and Basic EHT-MCS and NSS Set field**

| | | | | | | | | | | | | | | | |
|---|---|---|---|---|---|---|---|---|---|---|---|---|---|---|---|
| B0 | B3 | B4 | B7 | B8 | B11 | B12 | B15 | B16 | B19 | B20 | B23 | B24 | B27 | B28 | B31 |
| Rx Max Nss That Supports EHT-MCS 0-7 | | Tx Max Nss That Supports EHT-MCS 0-7 | | Rx Max Nss That Supports EHT-MCS 8-9 | | | Tx Max Nss That Supports EHT-MCS 8-9 | | Rx Max Nss That Supports EHT-MCS 10-11 | | Tx Max Nss That Supports EHT-MCS 10-11 | | Rx Max Nss That Supports EHT-MCS 12-13 | | Tx Max Nss That Supports EHT-MCS 12-13 |
| Bit:4 | | 4 | | 4 | | | 4 | | 4 | | 4 | | 4 | | 4 |

Table 5 shows the supported EHT-MCS and NSS sets under 20MHz bandwidth, which may specifically indicate the combination of EHT-MCS 0-13 for transmission and for reception and the number of spatial streams Nss supported by the device. However, the present disclosure is not limited thereto, and may also include similar information in an 80 MHz bandwidth, a 160 MHz bandwidth, and/or a 320 MHz bandwidth.

The EML capability information subfield in the multi-link information element and the information bits (Supported EHT-MCS and NSS Set) in the EHT capability information element may be transmitted during the multi-link process. For example, they may be carried by the AP MLD in the beacon frame, (re)association response frame, sensing response frame. Altenatively, they may be carried by the non-AP STA MLD in (re)association request frame, sensing request frame.

In other example embodiments of the present disclosure, in addition to using the information shown in Table 4 and Table 5 to select a suitable link, the link information may also be determined based on at least one of the following: an added or deleted link; or a link in the basic service set to which the non-AP STA MLD will be switched.

For example, when determining the link information, links in the BSS deleted from the AP MLD and links added to the BSS of the AP MLD may be considered. For example, if there is a BSS being deleted or added for the non-AP STA MLD, an appropriate link may be selected from the links other than the deleted link (that is, the remaining links) and from the added link to perform communication in the corresponding operation mode.

In addition, there may be situations where the non-AP STA MLD switches to other BSSs (e.g., switching BSS within the AP MLD associated with the non-AP STA MLD). In this case, for example, when determining the link information, links in the BSS that is switched to may be considered. That is, an appropriate link may be also selected from links in the BSS that is switched to for performing communication in the corresponding operation mode.

Furthermore, it will be understood that steps 210 and 220 in FIG. 2 may be performed on any of a plurality of links identified by the non-AP STA MLD. For example, referring to FIG. 1, a first message frame may be determined and sent on Link 1, and the information carried in the first message frame may indicate the operation mode for this link (Link 1) and/or other links (Link 2, Link 3, etc.).

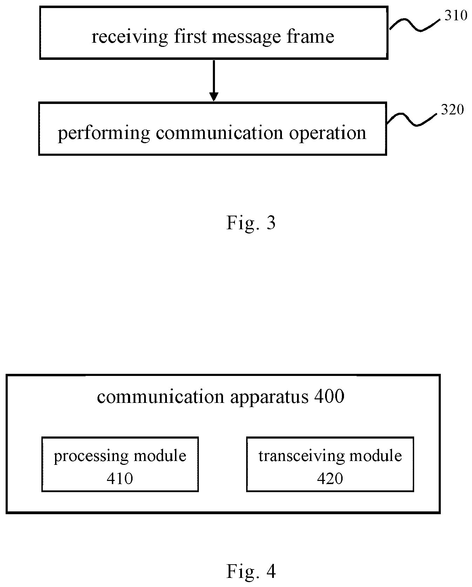

FIG. 3 is a flowchart illustrating a communication method according to another embodiment of the present disclosure. The communication method shown in FIG. 3 may be applied to an access point that supports a multi-link communication, that is, AP MLD.

Referring to FIG. 3, in step 310, a first message frame may be received. The first message frame may include identification information for indicating the operation mode to be maintained. The identification information corresponds to the link information used to identify the link to which the operation mode is applicable.

According to an embodiment of the present disclosure, the link information may be included in the first message frame and represents link set information. The link set information includes a plurality of bits. The plurality of bits respectively correspond to a plurality of pieces of link identification information supported by the non-AP STA MLD associated with the AP MLD. For example, in the case where at least one bit of the link set information is set to a specific value, the link set information indicates that the operation mode is maintained on at least one link corresponding to the at least one bit. For example, the identification information and the link information are located in different fields of the first message frame. In this case, the first message frame, the link information, and the identification information may be similar to those in the embodiments described above with reference to Table 1 and Table 2, and repeated descriptions are omitted here to avoid redundancy.

According to an embodiment of the present disclosure, the link information has a single bit for indicating that the operation mode is applicable to all links identified by the non-AP STA MLD associated with the AP MLD. For example, the identification information and the link information are located in the same field of the first message frame. In this case, the first message frame, the link information, and the identification information may be similar to those in the embodiments described above with reference to Table 1 and Table 3, and repeated descriptions are omitted here to avoid redundancy.

In step 320, a communication operation may be performed based on the first message frame. For example, if the AP MLD agrees with the identification information about the operation mode set in the received first message frame and the link (link information) to which the operation mode is applicable, the AP MLD may send a corresponding feedback frame (or a confirmation frame) to the non-AP STA MLD. If the AP MLD does not agree with the settings in the first message frame, the AP MLD may send the recommended operation mode and link information to the non-AP STA MLD.

Furthermore, according to embodiments of the present disclosure, the link information may be included in the capability information transmitted during the multi-link establishment process. For example, when the operation mode is the EMLMR mode, the link information may indicate a link selected from multiple spatial streams identified by the EML capability information in the multi-link information element. When the operation mode is the EMLSR mode, the link information may indicate a link selected from the modulation and coding strategy mode and the spatial stream group identified by the information bits in the EHT capability information element.

In addition, according to an embodiment of the present disclosure, the link information may be determined based on at least one of the following: an added or deleted link; or a link in a basic service set to which the non-AP STA MLD is to be switched.

FIG. 4 is a block diagram illustrating a communication apparatus 400 according to an embodiment. The communication apparatus 400 shown in FIG. 4 may be applied to a non-AP STA MLD or an AP MLD.

In the case where the communication apparatus 400 shown in FIG. 4 is applied to a non-AP STA MLD, the processing module 410 may be configured to determine a first message frame. The first message frame includes identification information used to indicate the operation mode to be maintained. The identification information corresponds to link information used to identify the link to which the operation mode is applicable. The transceiving module 420 may be configured to send the first message frame. That is to say, in this case, the communication apparatus 400 may perform the communication method described with reference to FIG. 2. The first message frame, the link information, and the identification information may be similar to those in the embodiments described with reference to Tables 1 to 5. For simplicity, repeated descriptions are omitted here.

In the case where the communication apparatus 400 shown in FIG. 4 is applied to an AP MLD, the transceiving module 420 may be configured to receive a first message frame. The first message frame includes identification information for indicating the operation mode to be maintained. The identification information corresponds to the link information used to identify the link to which the operation mode is applicable. The processing module 410 may be configured to control the execution of the communication operation based on the first message frame. That is to say, in this case, the communication apparatus 400 may perform the communication method described with reference to FIG. 3. The first message frame, the link information, and the identification information may be similar to those in the embodiments described with reference to Tables 1 to 5. For simplicity, repeated descriptions are omitted here.

In addition, the communication apparatus 400 shown in FIG. 4 is only an example, and embodiments of the present disclosure are not limited thereto. For example, the communication apparatus 400 may also include other modules, such as a memory module and the like. Furthermore, individual modules in the communication apparatus 400 may be combined into more complex modules, or may be divided into more individual submodules.

The communication method and the communication apparatus according to embodiments of the present disclosure enable non-AP STA MLDs operating in the EMLSR or EMLMR mode to communicate using appropriate links, reduce the possibility of communication conflicts, and indirectly improve the system throughput.

Based on the same principle as the method provided by the embodiments of the present disclosure, an embodiment of the present disclosure also provides an electronic device. The electronic device includes a processor and a memory. The memory has machine-readable instructions (also referred to as a "computer program") stored thereon. The processor is configured to execute the machine-readable instructions to implement the methods described with reference to FIGS. 2 and 3.

Embodiments of the present disclosure also provide a computer-readable storage medium having a computer program stored thereon. When the computer program is executed by a processor, the method described with reference to FIG. 2 and FIG. 3 is implemented.

In example embodiments, the processor may be used to implement or execute various example logical blocks, modules, and circuits described in conjunction with the present disclosure, such as Central Processing Unit (CPU), general-purpose processor, Digital Signal Processor (DSP), Application Specific Integrated Circuit (ASIC), Field Programmable Gate Array (FPGA), or other programmable logic devices, transistor logic devices, hardware components, or any combination thereof. The processor may also be a combination that implements computing functions, such as a combination of one or more microprocessors, a combination of a DSP and a microprocessor, etc.

In example embodiments, the memory may be, for example, Read Only Memory (ROM), Random Access Memory (RAM), Electrically Erasable Programmable Read Only Memory (EEPROM), Compact Disc Read Only Memory (CD-ROM), or other optical disk storage, optical disc storage (including compressed optical discs, laser discs, optical discs, digital versatile discs, Blu-ray discs, etc.), magnetic disk storage media, or other magnetic storage device, or any other medium that can be used to carry or store program codes in the form of instructions or data structures that can be accessed by a computer, but is not limited thereto.

It should be understood that although various steps in the flowchart of the accompanying drawings are shown in sequence as indicated by arrows, these steps are not necessarily performed in the order indicated by arrows. Unless explicitly stated in this description, the execution of these steps is not strictly limited in order, and they may be executed in other orders. In addition, at least some of the steps in the flow chart of the accompanying drawings may include multiple sub-steps or multiple stages. These sub-steps or stages are not necessarily executed at the same time, but may be executed at different times. The execution order does not necessarily need to be performed sequentially, but may be performed in turn or alternately with other steps or sub-steps of other steps or at least part of the stages.

While the present disclosure has been shown and described with reference to certain embodiments thereof, those skilled in the art will understand that various changes may be made in form and detail without departing from the scope of the present disclosure. Therefore, the scope of the present disclosure should not be limited to the embodiments, but should be defined by the appended claims and their equivalents.

## Claims

1. A communication method, applied to a non-Access Point Station Multi-Link Device, non-AP STA MLD, comprising:
determining a first message frame, wherein the first message frame comprises identification information for indicating an operation mode to be maintained, and the identification information corresponds to link information for identifying a link to which the operation mode is applicable; and
sending the first message frame.

2. The communication method according to claim 1, wherein
the link information is comprised in the first message frame, and the link information represents link set information, wherein the link set information comprises a plurality of bits, and the plurality of bits respectively correspond to a plurality of pieces of link identification information supported by the non-AP STA MLD.

3. The communication method according to claim 2, wherein
at least one bit of the link set information is set to a specific value, and
the link set information indicates that the operation mode is maintained on at least one link corresponding to the at least one bit.

4. The communication method according to claim 2 or 3, wherein the identification information and the link information are located in different fields of the first message frame.

5. The communication method according to claim 1, wherein the link information has a single bit for indicating that the operation mode is applicable to all links identified by the non-AP STA MLD.

6. The communication method according to claim 5, wherein the identification information and the link information are located in a same field of the first message frame.

7. The communication method according to claim 1, wherein the link information is comprised in capability information transmitted during a multi-link establishment process.

8. The communication method according to claim 7, wherein
when the operation mode is an EMLMR mode, the link information indicates a link selected from a plurality of spatial streams identified by EML capability information in a multi-link information element; and
when the operation mode is an EMI,SR mode, the link information indicates a link selected from a modulation and coding strategy mode and a spatial stream group identified by information bits in an EHT capability information element.

9. The communication method according to claim 1, wherein the link information is determined based on at least one of an added or deleted link; or a link in a basic service set to which the non-AP STA MLD is to be switched.

10. A communication method, applied to an Access Point Multi-Link Device, AP MLD, comprising:
receiving a first message frame, wherein the first message frame comprises identification information for indicating an operation mode to be maintained, and the identification information corresponds to link information for identifying a link to which the operation mode is applicable; and
performing a communication operation based on the first message frame.

11. The communication method according to claim 10, wherein
the link information is comprised in the first message frame, and the link information represents link set information, wherein the link set information comprises a plurality of bits, and the plurality of bits respectively correspond to a plurality of pieces of link identification information supported by a non-AP STA MLD associated with the AP MLD.

12. The communication method according to claim 11, wherein
at least one bit of the link set information is set to a specific value, and
the link set information indicates that the operation mode is maintained on at least one link corresponding to the at least one bit.

13. The communication method according to claim 10 or 11, wherein the identification information and the link information are located in different fields of the first message frame.

14. The communication method according to claim 10, wherein the link information has a single bit for indicating that the operation mode is applicable to all links identified by a non-AP STA MLD associated with the AP MLD.

15. The communication method according to claim 14, wherein the identification information and the link information are located in a same field of the first message frame.

16. The communication method according to claim 10, wherein the link information is comprised in capability information transmitted during a multi-link establishment process.

17. The communication method according to claim 16, wherein
when the operation mode is an EMLMR mode, the link information indicates a link selected from a plurality of spatial streams identified by EML capability information in a multi-link information element; and
when the operation mode is an EMLSR mode, the link information indicates a link selected from a modulation and coding strategy mode and a spatial stream group identified by information bits in an EHT capability information element.

18. The communication method according to claim 10, wherein the link information is determined based on at least one of: an added or deleted link; or a link in a basic service set to which the non-AP STA MLD is to be switched.

19. A communication apparatus, comprising:
a processing module, configured to determine a first message frame, wherein the first message frame comprises identification information for indicating an operation mode to be maintained, and the identification information corresponds to link information for identifying a link to which the operation mode is applicable; and
a transceiving module, configured to send the first message frame.

20. A communication apparatus, comprising:
a transceiving module, configured to receive a first message frame, wherein the first message frame comprises identification information for indicating a operation mode to be maintained, and the identification information corresponds to link information for identifying a link to which the operation mode is applicable; and
a processing module, configured to control execution of a communication operation based on the first message frame.

21. An electronic device, comprising a memory, a processor, and a computer program stored on the memory and executable by the processor, wherein the processor is configured to implement the method according to any one of claims 1 to 9 or the method according to any one of claims 10 to 18 when executing the computer program.

22. A computer-readable storage medium, wherein a computer program is stored on the computer-readable storage medium, and the computer program is configured to implement the method according to any one of claims 1 to 9 or the method according to any one of claims 10 to 18 when being executed by a processor.
